# EUROPEAN PATENT SPECIFICATION

(11) **EP 3 936 258 B1**
(45) Date of publication and mention of the grant of the patent: **23.08.2023**
(21) Application number: 20184112.9
(22) Date of filing: 06.07.2020
(51) Int. Cl.: B22F 3/00, B29C 64/321, B33Y 30/00, B22F 3/105, B22F 12/53, B22F 12/90, B22F 10/18, B22F 12/50

(54) **EXTRUDER AND PRINTING UNIT FOR 3D METAL PRINTING**
EXTRUDER UND DRUCKEINHEIT FÜR DEN 3D-METALLDRUCK
EXTRUDEUSE ET UNITÉ D'IMPRESSION POUR IMPRESSION MÉTALLIQUE 3D

(43) Date of publication of application: 12.01.2022
(73) Proprietor: 3D Gence Spólka Z Ograniczona Odpowiedzialnoscia, 40-085 Katowice (PL)
(72) Inventor: Turzynski, Filip, 81-741 Sopot (PL); Wilk, Krzysztof, 41-400 Myslowice (PL); Janus, Bartosz, 41-940 Piekary Slaskie (PL); Olesz, Robert, 43-211 Piasek (PL); Jop, Piotr, 27-225 Pawlów (PL)
(74) Representative: AOMB Polska Sp. z.o.o.

(56) References cited:
- WO-A1-2017/088754
- CN-U- 209 633 783
- JOHN LAURETO ET AL: "Open Source Multi-Head 3D Printer for Polymer-Metal Composite Component Manufacturing", TECHNOLOGIES, vol. 5, no. 2, 15 June 2017 (2017-06-15), page 36, XP055753833, DOI: 10.3390/technologies5020036
- "ISO 868:2003 Plastics and ebonite -- Determination of indentation hardness by means of a durometer (Shore hardness)", INTERNATIONAL STANDARD ISO/IEC, XX, XX, vol. ISO 868, 1 January 2003 (2003-01-01), pages 1-5, XP009105028,
- Anonymous: "SHORE A HARDNESS SCALE CROSS REFERENCES", , 3 December 2018 (2018-12-03), XP055529397, Retrieved from the Internet: URL:http://apstpe.com/media/pdf/Shore-Hard ness-Scales.pdf [retrieved on 2018-12-03]
- Anonymous: "FAQ durometer | Labomat", , 20 February 2023 (2023-02-20), XP093025588, Retrieved from the Internet: URL:https://labomat.eu/gb/hardness-faq/784 -faq-durometer.html [retrieved on 2023-02-20]

## Description

The subject of the invention is an extruder and a printing unit for a 3D metal printing system.

The printing process from metal is currently carried out in two main ways - direct and indirect. The direct metal printing process is using metal powder, which results is a finished target product. The indirect printing process results in a semi-finished model that is a composite of metal powder and polymer mix requiring further processing in order to achieve the final form, in which through the process of removing polymer in debinding process and further sintering. Currently, the main development paths in the field of 3D metal printing are powder printing and technology, the stage of which is the layering of the material.

The subject of this invention relates to 3D metal printing technology implemented by layered material deposition, where an intermediate semi-finished model is manufactured and requires further processing to achieve its target physical properties in further processes. The printing material used is in the form of a fragile filament containing up to 85% metal weight.

In the state of the art, a printing assembly using two drive-transfer gears is known, enabling constant and uniform feed of the printing material and low failure rate.

In the another example known in the state of the art printing motion transfer assembly built in connection with a digital position sensor is known, which allows measuring the correctness of the system operation.

In the another example known in the state of the art printing assembly comprises a digital position sensor, extruder and printhead, being a basic combination in the technology of layered material deposition.

None of the known methods provide the properties for printing material consisting of metal in the form of a filament, due to the fragility of the material, low feed rate, uneven material flow, and high risk of printing assembly failures.

CN 209633783 U discloses a 3D printer extrusion mechanism using gear rollers and non-slip sleeves connected to the wire.

The extruder according to the invention comprises two rotatable elements, wherein elements that are in contact with the filament are covered with a suitable, flexible coating with an increased friction. Elements that come into contact with the filament are constructed that allows replacement in a way that does not require specialized tools and can be carried out without contacting the device manufacturer's service.

The subject of the invention is an extruder for a 3D metal printing system in which the printing material is fed in the form of a fragile metal filament containing two rotatable elements at least partially cylindrical and arranged in parallel with each other in such a way, that each of the rotatable elements can rotate about the axis of the cylindrical part and the first of the rotatable elements rotates in the opposite direction to the other. Each of the rotatable elements has a drive transmission zone at least at one ends and a material feed zone in the cylindrical part. The material feed zones of both rotatable elements are at least partly covered with a resilient coating in the form of an replaceable cap element. The replaceable cap element may be made of material of hardness between 20D and 70D on the Schore scale to provide the required friction translating into friction force and feed efficiency for materials, and to reduce usage of the replaceable flexible element itself. The material feed zone of at least one of the rotatable elements has a reduced diameter area, creating space between the surface of the material feed zone and a replaceable cap element, constituting a flexible zone.

The role of rotatable elements can be preferably performed by an assembly of two cooperating gears, the drive transmission zones of which are knurled zones.

Preferably the replaceable cap element can be made of materials selected from polyurethane, elastomers, vulcanized rubber, rubber, polyvinyl chloride, ethylene copolymer.

The rotatable elements can preferably be made of metal such as steel, hardened steel, titanium, brass, bronze or plastics.

The invention also relates to a printing assembly for 3D metal printing technology in which the printing material is fed in the form of a fragile filament comprising the extruder according to the invention and a printhead.

Preferably, the printhead comprises a channel, a heating block and a nozzle of the head.

Preferably the printing assembly comprises a digital position sensor module connected to the extruder.

The proposed system according to the invention allows working with fragile printing material in a form of filament and provides constant feed. The use of a replaceable cap element with an increased friction enables fast material feed, does not damage fragile printing material and enables maintaining consistently high quality of printed elements. Furthermore, it is possible to easily and quickly replace of out-of-used flexible element which significantly reduces service time. The shape and design of the printhead, and in particular its nozzle, minimizes the risk of system failures.

Use of a digital position sensor is preferable to detect a potential failure in the area of the printed material and increase the feeding accuracy.

Use of a printhead with an opening angle of preferably at least 150 degrees and a conical shape allows the proper flow of printing materials and prevents soiling and occlusion.

The whole printing unit allows printing from fragile materials, which have very low mechanical strength and marginal bending resistance, with a speed of extrusion preferably from 30mm/s to 80 mm/s.

The subject of the invention is presented in the embodiment in the drawing, in which:

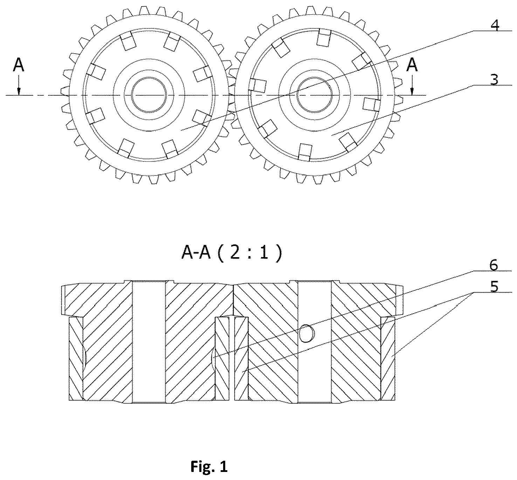

Fig. 1 shows the assembly of gears responsible for the material feed in the front view and the cross-section of the abovementioned assembly,

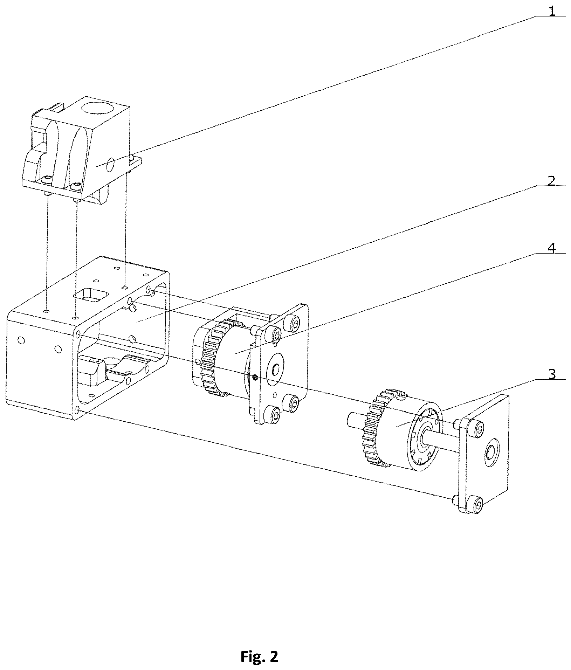

Fig. 2 shows the elements of the material feeding system in an oblique view,

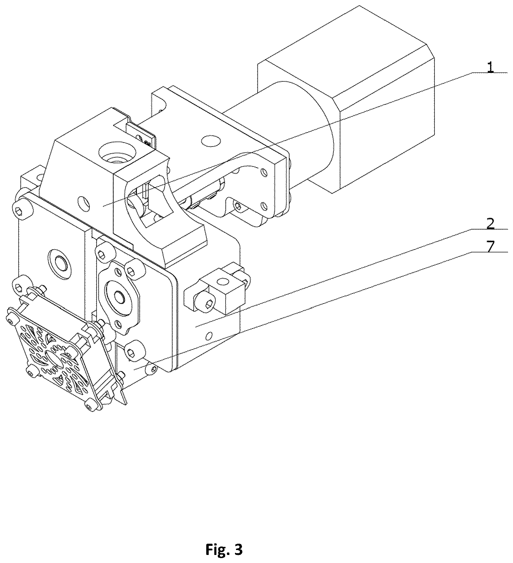

Fig. 3 shows the elements of the printing assembly in an oblique view,

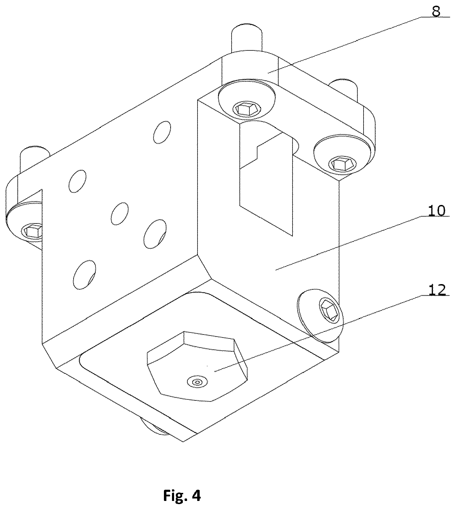

Fig. 4 is an bottom oblique view of the printhead,

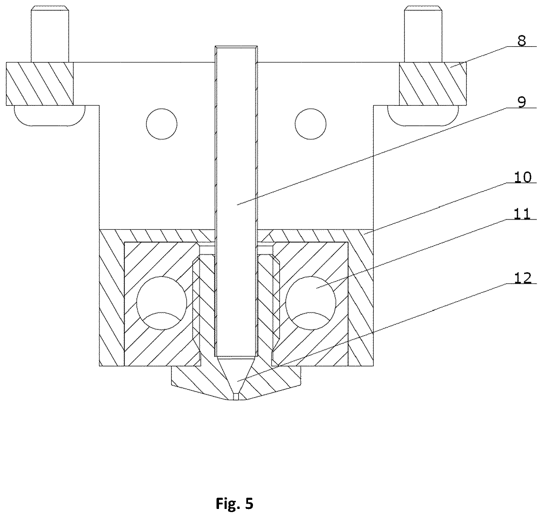

Fig. 5 is a cross-sectional view of the printhead.

In the extruder body 2 there is a gear on the drive shaft 3 and a driven gear 4, which gears include a replaceable cap element 5 and a contact zone. It is also possible to implement the invention in which the rotary elements have separate drives.

The extruder body 1 is connected to the printhead 7, which includes a heat shield 8, channel 9, heating block 10, heater mounting 11 and head nozzle 12.

In a preferred embodiment of the invention, the printing material is fed into the digital position sensor module 1 and then into the extruder body 2 by gear assembly 3 and 4. The material feed is carried out through replaceable cap elements 5 mounted on the gears 3 and 4 in the material feed zone 6 entering the material to the printhead 7. The filament is guided through the head channel 9 where it is heated by heating block 10, through a system of two heaters 11 and directly extruded through a nozzle 12. The printhead has a heat shield 8 to prevent heat loss.

## Claims

1. An extruder for a 3D metal printing system, in which the printing material is fed in the form of a fragile filament, comprising two rotatable elements (3,4), at least partially cylindrical and arranged parallelly to each other in such a way that each of the rotatable elements (3, 4) can rotate about the axis of the cylindrical part, and the first rotatable element (3) can rotate in the opposite direction than the second rotatable element (4), wherein each rotatable element (3, 4) has a drive transmission zone at at least one of its ends and a material feed zone (6) in the cylindrical part, and the material feed zones (6) of both rotatable elements (3, 4) are at least partially covered by a resilient coating in the form of a replaceable cap element (5),
**characterised in that** the material feed zone (6) of at least one of the rotatable elements (3, 4) has a reduced diameter area, creating space between the surface of the material feed zone (6) and a replaceable cap element (5), constituting a flexible zone.

2. The extruder according to the claim 1 **characterized in that** that the role of rotatable elements (3, 4) is carried out by an assembly of two cooperating gears, the drive transmission zones of which are knurled zones.

3. The extruder according to any of the preceding claims, **characterized in that** that the replaceable cap element (5) is made of a material chosen from: polyurethane, elastomers, vulcanized rubber, rubber, polyvinyl chloride, ethylene copolymer.

4. The extruder according to any of the preceding claims, **characterized in that** that the rotatable elements (3, 4) are made of plastic or metal or metal alloy such as steel, hardened steel, titanium, brass, bronze.

5. A printing unit for 3D metal printing technology, in which the printing material is fed in the form of a fragile filament, **characterized in that** that it comprises an extruder (2), according to any of the preceding claims, and a printing head (7).

6. The printing unit according to claim 5, **characterized in that** the printing head (7) comprises a channel (9), a heating block (10) and a head nozzle (12).

7. The printing unit according to claim 6, **characterized in that** the head nozzle (12) has a conical shape with a preferably at least 150 degrees opening angle.

8. The printing unit according to claim 5 or 6 or 7, **characterized in that** it contains a digital position sensor module (1) connected to the extruder (2).

## Patentansprüche

1. Extruder für ein 3D-Metalldrucksystem, bei dem das Druckmaterial in Form eines zerbrechlichen Filaments zugeführt wird, mit zwei drehbaren Elementen (3, 4), die zumindest teilweise zylindrisch und derart paralell zueinander angeordnet sind, dass jedes der drehbaren Elemente (3, 4) um die Achse des zylindrischen Teils drehbar ist, und das erste Drehelement (3) gegenläufig zum zweiten Drehelement (4) drehbar ist, wobei jedes Drehelement (3, 4) an mindestens einem seiner Enden einen Antriebsübertragungsbereich und im zylindrischen Teil einen Materialzuführungsbereich (6) aufweist und die Materialzuführungsbereiche (6) beider Drehelemente (3, 4) zumindest teilweise mit einer elastischen Beschichtung in Form eines auswechselbaren Kappenelements (5) überzogen sind,
**dadurch gekennzeichnet, dass**
der Materialzuführungsbereich (6) mindestens eines der drehbaren Elemente (3, 4) einen reduzierten Durchmesserbereich aufweist, so dass zwischen der Oberfläche des Materialeinzugsbereichs (6) und einem auswechselbaren Kappenelement (5) ein Zwischenraum entsteht, der einen flexiblen Bereich darstellt.

2. Extruder nach Anspruch 1, **dadurch gekennzeichnet, dass** die Rolle der drehbaren Elemente (3, 4) durch eine Anordnung von zwei zusammenwirkenden Zahnrädern ausgeführt wird, deren Antriebsübertragungszonen gerändelte Zonen sind.

3. Extruder nach einem der vorhergehenden Ansprüche, **dadurch gekennzeichnet, dass** das austauschbare Kappenelement (5) aus einem Material besteht, das aus Folgendem ausgewählt ist: Polyurethan, Elastomeren, vulkanisiertem Gummi, Kautschuk, Polyvinylchlorid, Ethylencopolymer.

4. Extruder nach einem der vorhergehenden Ansprüche, **dadurch gekennzeichnet, dass** die drehbaren Elemente (3, 4) aus Kunststoff oder Metall oder einer Metalllegierung wie Stahl, gehärteter Stahl, Titan, Messing, Bronze bestehen.

5. Druckeinheit für die 3D-Metalldrucktechnik, bei der das Druckmaterial in Form eines zerbrechlichen Filaments zugeführt wird, **dadurch gekennzeichnet, dass** sie einen Extruder (2) nach einem der vorhergehenden Ansprüche und einen Druckkopf (7) umfasst.

6. Druckeinheit nach Anspruch 5, **dadurch gekennzeichnet, dass** der Druckkopf (7) einen Kanal (9), einen Heizblock (10) und eine Kopfdüse (12) aufweist.

7. Druckeinheit nach Anspruch 6, **dadurch gekennzeichnet, dass** die Kopfdüse (12) eine konische Form mit einem Öffnungswinkel von vorzugsweise mindestens 150 Grad aufweist.

8. Druckeinheit nach Anspruch 5 oder 6 oder 7, **dadurch gekennzeichnet, dass** sie ein digitales Positionssensormodul (1) enthält, das mit dem Extruder (2) verbunden ist.

## Revendications

1. Une extrudeuse pour un système d'impression 3D sur métal, dans laquelle le matériau d'impression est alimenté sous la forme d'un filament fragile, comprenant deux éléments rotatifs (3, 4), au moins partiellement cylindriques et disposés parallèlement l'un à l'autre de telle sorte que chacun des éléments rotatifs (3, 4) peut tourner autour de l'axe de la partie cylindrique, et que le premier élément rotatif (3) peut tourner dans la direction opposée à celle du second élément rotatif (4), dans laquelle chaque élément rotatif (3, 4) a une zone de transmission d'entraînement à au moins une de ses extrémités et une zone d'alimentation en matériau (6) dans la partie cylindrique, et les zones d'alimentation en matériau (6) des deux éléments rotatifs (3, 4) sont au moins partiellement recouvertes d'un revêtement résilient sous la forme d'un élément de capuchon remplaçable (5),
**caractérisée en ce que**
la zone d'alimentation en matériau (6) d'au moins un des éléments rotatifs (3, 4) a une surface de diamètre réduit, laissant un espace entre la surface de la zone d'alimentation en matériau (6) et un élément de capuchon remplaçable (5), constituant ainsi une zone flexible.

2. L'extrudeuse selon la revendication 1 **caractérisée en ce que** le rôle des éléments rotatifs (3, 4) est assuré par un ensemble de deux engrenages coopérants dont les zones de transmission d'entraînement sont des zones moletées.

3. L'extrudeuse selon l'une quelconque des revendications précédentes, **caractérisée en ce que** l'élément de capuchon remplaçable (5) est réalisé en un matériau choisi parmi : le polyuréthane, les élastomères, le caoutchouc vulcanisé, le caoutchouc, le chlorure de polyvinyle, le copolymère d'éthylène.

4. L'extrudeuse selon l'une quelconque des revendications précédentes, **caractérisée en ce que** les éléments rotatifs (3, 4) sont en plastique ou en métal, ou en alliage métallique, tel que l'acier, l'acier trempé, le titane, le laiton, le bronze.

5. Une unité d'impression pour la technologie d'impression 3D sur métal, dans laquelle le matériau d'impression est alimenté sous la forme d'un filament fragile, **caractérisée en ce qu'**elle comprend une extrudeuse (2), selon l'une quelconque des revendications précédentes, et une tête d'impression (7).

6. L'unité d'impression selon la revendication 5, **caractérisée en ce que** la tête d'impression (7) comprend un canal (9), un bloc chauffant (10) et une buse de tête (12).

7. L'unité d'impression selon la revendication 6, **caractérisée en ce que** la buse de tête (12) a une forme conique avec un angle d'ouverture de préférence d'au moins 150 degrés.

8. L'unité d'impression selon la revendication 5 ou 6 ou 7, **caractérisée en ce qu'**elle contient un module de capteur de position numérique (1) relié à l'extrudeuse (2).
